# EUROPÄISCHE PATENTSCHRIFT

(11) **EP 3 246 669 B1**
(45) Veröffentlichungstag und Bekanntmachung des Hinweises auf die Patenterteilung: **31.07.2019**
(21) Anmeldenummer: 17000663.9
(22) Anmeldetag: 19.04.2017
(51) Int. Cl.: G01F 1/84

(54) **CORIOLIS-MASSENDURCHFLUSSMESSGERÄT UND VERFAHREN ZUR EINSTELLUNG DER STROMSTÄRKE IN EINEM STROMKREIS EINES TREIBERS EINES CORIOLIS-MASSENDURCHFLUSSMESSGERÄTES**
CORIOLIS MASS FLOW METER AND METHOD FOR ADJUSTING THE ELECTRIC CURRENT IN A CIRCUIT OF A DRIVER OF A CORIOLIS MASS FLOW METER
DÉBITMÈTRE MASSIQUE CORIOLIS ET PROCÉDÉ DE RÉGLAGE DU COURANT ÉLECTRIQUE DANS UN CIRCUIT D'UN DISPOSITIVE D'EXCITATION D'UN DÉBITMÈTRE MASSIQUE CORIOLIS

(30) Priorität: 18.05.2016 DE 102016006185
(43) Veröffentlichungstag der Anmeldung: 22.11.2017
(73) Patentinhaber: ROTA YOKOGAWA GmbH & Co. KG, 79664 Wehr (DE)
(72) Erfinder: Schirmacher, Erich, 79713 Bad Säckingen (DE)
(74) Vertreter: Tomerius, Isabel

(56) Entgegenhaltungen:
- WO-A1-2013/189589
- DE-A1- 10 012 309
- DE-A1-102010 030 924
- JP-A- H02 120 622
- US-A1- 2008 012 428
- Anonymous: "Current divider - Wikipedia, the free encyclopedia", , 23. November 2014 (2014-11-23), XP055252396, Gefunden im Internet: URL:https://en.wikipedia.org/w/index.php?t itle=Current_divider&oldid=635119825 [gefunden am 2016-02-23]

## Beschreibung

Die Erfindung betrifft ein Coriolis-Massendurchflussmessgerät und ein Verfahren zur Einstellung der Stromstärke in einem Stromkreis eines Treibers eines Coriolis-Massendurchflussmessgerätes.

Gattungsgemäße Coriolis-Massendurchflussmessgeräte werden typischerweise in Prozessen eingesetzt, in denen der Masse- beziehungsweise der Volumendurchfluss, die Dichte und die Temperatur eines durch eine Rohrleitung fließenden Mediums bestimmt werden sollen. Dabei können je nach Industriezweig die verschiedensten Medien gemessen werden, beispielsweise Öl, Milch, Flüssiggas oder sogar geschmolzener Teer. Gattungsgemäße Coriolis-Massendurchflussmessgeräte umfassen dafür typischerweise wenigstens ein Messrohr, durch das das jeweilige Messmedium hindurchgeleitet werden kann, und einen Treiber, beispielsweise eine elektromagnetische Spule, der das Messrohr in Resonanzschwingungen versetzt. Weiter umfassen sie zumeist einen ersten Sensor und einen zweiten Sensor, die entlang einer Fließrichtung des Messmediums versetzt zueinander am Messrohr angeordnet sind und die die Schwingungen des Messrohres detektieren. Die Sensoren sind beispielsweise ebenfalls als elektromagnetische Aufnehmer ausgebildet. Dadurch, dass das Messrohr in Resonanzschwingungen versetzt wird, wird das durch das Messrohr hindurch fließende Messmedium Coriolis-Kräften ausgesetzt. Diese wiederum führen zu einer Phasenverschiebung der am ersten und am zweiten Sensor detektierten Schwingungen des Messrohres. Die gemessene Phasenverschiebung kann als Maß für den Massendurchfluss genutzt werden. Dieses Prinzip ist im Stand der Technik bekannt. So sind gattungsgemäße Coriolis-Massendurchflussmessgeräte beispielsweise in der US 2008/0012428 A1, EP 2 657 659 A1, DE 10 2012 016 490 A1 und der DE 10 2015 003 365 A1 beschrieben.

Je nachdem, mit welchem Messmedium das Coriolis-Massendurchflussmessgerät eingesetzt werden soll, und beispielsweise ebenfalls je nach den konkreten Dimensionen des Messrohres, kommen auf den Anwendungsfall hin optimierte Treiber zum Einsatz. Aufgrund der unterschiedlichen Anforderungen an die Treiber, die das jeweils eingesetzte Messrohr im vom Messmedium durchströmten Zustand in Resonanzschwingungen versetzen sollen, müssen die Treiber mit einer unterschiedlichen Stromstärke betrieben werden. Zum elektrischen Anschluss eines Stromkreises eines Treibers an eine Spannungsquelle weisen die gattungsgemäßen Coriolis-Massendurchflussmessgeräte daher eine Anschlussplatte auf. Um den Stromfluss, insbesondere die Stromstärke, im Stromkreis des Treibers an die Anforderungen des jeweiligen Treibers anzupassen, wird die Anschlussplatte typischerweise mit einem im Stromkreis des Treibers in Reihe geschalteten Widerstand versehen, dessen Widerstandswert derart gewählt wird, dass die Stromstärke im Stromkreis dem für den eingesetzten Treiber gewünschten Wert entspricht. Die Anschlussplatte im Coriolis-Massendurchflussmessgerät wird also auf den Treiber und dieser wiederum auf das durchströmende Medium hin konfektioniert.

Darüber hinaus werden Coriolis-Massendurchflussmessgeräte oftmals an Einsatzorten verwendet, in denen eine brennbare beziehungsweise explosive Atmosphäre vorliegt. In diesen explosionsgefährdeten Bereichen muss das Coriolis-Massendurchflussmessgerät eigensicher sein. Eigensicher bedeutet, dass sowohl die Stromstärke als auch die Spannung innerhalb der Stromkreise des Coriolis-Massendurchflussmessgerätes derart begrenzt werden, dass sich explosionsfähige Brennstoff-LuftGemische auf keinen Fall entzünden können, und zwar weder durch Funkenbildung noch durch Erwärmung. Damit Coriolis-Massendurchflussmessgeräte in explosionsgefährdeten Bereichen eingesetzt werden können, ist gesetzlich festgelegt, dass sie bestimmte Normen zu erfüllen haben, insbesondere in Bezug auf die Eigensicherheit der verwendeten Stromkreise. Die Einhaltung dieser Normen wird unabhängig geprüft und die Eigensicherheit entsprechend zertifiziert. Ohne entsprechende Zertifizierung darf ein Coriolis-Massendurchflussmessgerät in explosionsgefährdeten Bereichen nicht betrieben werden. Derartige Zertifizierungen sind jedoch zeitraubend und kostenintensiv.

Die Aufgabe der vorliegenden Erfindung ist es, den Arbeits- und Kostenaufwand bei der Herstellung von Coriolis-Massendurchflussmessgeräten, insbesondere bei der Produktion von verschiedenen Coriolis-Massendurchflussmessgeräten, die unterschiedliche Treiber einsetzen, zu verringern und den Zertifizierungsaufwand einzuschränken. Die Möglichkeit, den Stromkreis des Treibers eigensicher auszubilden, soll dabei nicht eingeschränkt werden.

Die Lösung der Aufgabe gelingt mit einem Coriolis-Massendurchflussmessgerät und einem Verfahren gemäß den unabhängigen Ansprüchen. Bevorzugte Weiterbildungen und Verfahrensvarianten sind in den abhängigen Ansprüchen angegeben.

Konkret gelingt die Lösung bei einem eingangs erwähnten Coriolis-Massendurchflussmessgerät dadurch, dass an der Anschlussplatte im Stromkreis des Treibers wenigstens ein parallel geschalteter Widerstand vorgesehen ist, der zur Einstellung einer bestimmten Stromstärke im Stromkreis aktivierbar oder deaktivierbar ist, so dass dieselbe Anschlussplatte für verschiedene Treiber eingesetzt werden kann. Der wenigstens eine Widerstand ist im Stromkreis des Treibers parallel zum Stromkreis geschaltet. Der wenigstens eine Widerstand kann also beispielsweise zu einem Leitungsstück des Stromkreises parallel geschaltet sein. Das Leitungsstück, zu dem der wenigstens eine Widerstand parallel geschaltet ist, ist logischerweise dann ebenfalls parallel zum wenigstens einen Widerstand geschaltet und kann beispielsweise ebenfalls als parallel geschalteter Widerstand, hier speziell mit einem Widerstandswert von 0 Ω, angesehen werden. Durch die Parallelschaltung wenigstens eines Widerstandes zum Stromkreis des Treibers ergeben sich also automatisch zwei zueinander parallel geschaltete Widerstände. Der wenigstens eine zum Stromkreis parallel geschaltete Widerstand ist erfindungsgemäß aktivierbar oder deaktivierbar. Aktivierbar oder deaktivierbar bedeutet vorliegend, dass der wenigstens eine parallel geschaltete Widerstand zum Stromkreis des Treibers hinzugefügt oder aus diesem entfernt werden kann. Durch das Aktivieren oder das Deaktivieren des wenigstens einen parallel geschalteten Widerstandes wird also eingestellt, ob überhaupt Strom durch den Widerstand fließen kann oder nicht. Ein aktivierter Widerstand wirkt wie ein ganz normaler in dem Stromkreis des Treibers parallel geschalteter Widerstand, während ein deaktivierter Widerstand keine derartige Wirkung entfaltet. Ein deaktivierter Widerstand beeinflusst den Stromkreis des Treibers nicht, wirkt also, als wäre er überhaupt nicht vorhanden. Bevorzugt sind sämtliche parallel zueinander geschalteten Widerstände im Stromkreis des Treibers aktivierbar oder deaktivierbar ausgebildet, also auch derjenige Leitungsabschnitt des Stromkreises, zu dem der wenigstens eine parallel geschaltete Widerstand parallel geschaltet ist und der beispielweise einen Widerstandswert von 0 Ω aufweist. Beispielsweise kann der aus dem Leitungsabschnitt des Stromkreises gebildete Widerstand von 0 Ω deaktiviert werden, so dass Stromfluss nur noch durch den wenigstens einen parallel geschalteten Widerstand möglich ist. Das Aktivieren beziehungsweise Deaktivieren der Widerstände wird von einem Bediener bei der Montage der Anschlussplatte im Coriolis-Massendurchflussmessgerät und/oder bei der Montage des Coriolis-Massendurchflussmessgerätes in der Rohrleitung des zu messenden Mediums durchgeführt. Durch das Zuschalten beziehungsweise
Aktivieren des wenigstens einen parallel geschalteten Widerstandes in den Stromkreis des Treibers oder durch dessen Abschalten beziehungsweise Deaktivieren verändert sich die Stromstärke im Stromkreis des Treibers. Auf diese Weise lässt sich die erfindungsgemäße Anschlussplatte für verschiedene Treiber einsetzen, die eine unterschiedliche Stromstärke benötigen. Je nach eingesetztem Treiber wird der wenigstens eine parallel geschaltete Widerstand aktiviert oder deaktiviert, sodass sich insgesamt, beispielsweise bei Verwendung der gleichen Spannungsquelle, die Stromstärke im Stromkreis des Treibers an die Anforderungen des Treibers anpassen lässt. Die Erfindung ermöglicht es daher, dieselbe Anschlussplatte für verschiedene Treiber einzusetzen. Es muss nicht länger für jede Art von Treiber eine eigene Anschlussplatte hergestellt werden, was den Fertigungsaufwand und die Herstellungskosten erheblich verringert.

Durch den wenigstens einen parallel geschalteten Widerstand ist es ebenfalls möglich, die Stromstärke im Stromkreis des Treibers derart zu regulieren, dass eine Zündung von explosionsfähigen Brennstoff-Luft-Gemischen in entsprechend gefährdeten Bereichen ausgeschlossen ist. In dieser bevorzugten Ausführungsform der Erfindung ist der Stromkreis des Treibers auf der Anschlussplatte durch den wenigstens einen parallel geschalteten Widerstand eigensicher ausgebildet, insbesondere mit maximaler eigensicherer Leistung. Die Eigensicherheit des Stromkreises des Treibers kann also direkt durch den wenigstens einen parallel geschalteten Widerstand auf der Anschlussplatte erreicht werden. Im Stand der Technik wurde die Eigensicherheit aufgrund der verschiedenen eingesetzten Anschlussplatten zumeist nicht auf der Anschlussplatte selbst, sondern beispielsweise über deren Kontaktierung zu einer Erdung erreicht. Ein wesentlicher Aspekt der Erfindung liegt darin, dass durch den wenigstens einen parallel geschalteten Widerstand auf der Anschlussplatte direkt die Eigensicherheit des Stromkreises gewährleistet werden kann. Der wenigstens eine parallel geschaltete Widerstand ist dabei derart ausgebildet, dass der Stromkreis auf der Anschlussplatte eigensicher ist, wenn für den geeigneten Treiber der zu diesem passende Widerstand aktiviert wird und/oder der wenigstens eine nicht benötigte Widerstand deaktiviert wird. Insbesondere ist der wenigstens eine parallel geschaltete Widerstand so ausgebildet, dass er einen Betrieb des Treibers mit maximaler eigensicherer Leistung ermöglicht. Die maximale eigensichere Leistung wird durch die im jeweiligen Anwendungsland geltenden Normen vorgegeben. Beispiele sind die IECEx-Standards oder die ATEX-Richtlinien. In Deutschland und Europa beispielsweise finden sich Vorgaben in der DIN EN 60079. Vorteilhaft für den Einsatz des erfindungsgemäßen Coriolis-Massendurchflussmessgerätes ist, dass durch den wenigstens einen parallel geschalteten Widerstand und dessen Auslegung in einfacher Weise regelmäßig die maximal mögliche eigensichere Leistung des Stromkreises des Treibers ausgereizt werden kann. Ein weiterer besonderer Vorteil dieser Ausführungsform liegt darin, dass die Anschlussplatte mit dem wenigstens einen parallel geschalteten Widerstand insgesamt zum Einsatz in explosionsgefährdeten Bereichen zertifiziert werden kann. Auch der Prozess des Aktivierens beziehungsweise Deaktivierens des wenigstens einen parallel geschalteten Widerstandes wird also in die Zertifizierung der Eigensicherheit mit einbezogen. Auf diese Weise muss die erfindungsgemäße Anschlussplatte nur ein einziges Mal zur Benutzung in explosionsgefährdeten Bereichen als den entsprechenden Normen genügend zertifiziert werden. Je nach Treibergenügt es dann, lediglich die Aktivierung beziehungsweise Deaktivierung des wenigstens einen parallel geschalteten Widerstandes entsprechend so zu wählen, dass der Treiber mit der vorgesehenen Stromstärke versorgt wird. Eine Änderung des Eigensicherheitskonzeptes beziehungsweise eine neue Zertifizierung der Eigensicherheit ist dann nicht notwendig. Auf diese Weise kann ein erheblicher Zeitaufwand zur Zertifizierung unterschiedlicher Anschlussplatten vermieden werden, ohne die Explosionssicherheit des Coriolis-Massendurchflussmessgerätes zu gefährden.

Um die Flexibilität der Anschlussplatte in Bezug auf unterschiedliche Treiber zu erhöhen, ist es bevorzugt, dass mehrere parallel geschaltete Widerstände im Stromkreis des Treibers vorgesehen sind. Insbesondere sind Ausführungsformen bevorzugt, in denen zwei bis sechs oder sogar mehr als sechs parallel geschaltete Widerstände im Stromkreis des Treibers vorgesehen sind, die zweckmäßig alle voneinander verschiedene Widerstandswerte aufweisen. Sämtliche dieser parallel geschalteten Widerstände sind sowohl zum Stromkreis des Treibers als auch untereinander parallel geschaltet. Sie sind alle aktivierbar oder deaktivierbar ausgebildet, wodurch sich eine Vielzahl von Wahlmöglichkeiten ergibt. Auf diese Weise lässt sich eine Vielzahl von verschiedenen Treibern, insbesondere eigensicher, mit der erfindungsgemäßen Anschlussplatte betreiben.

Durch den Einsatz einer Vielzahl parallel geschalteter Widerstände ergibt sich die bevorzugte Ausführungsform der Erfindung, dass auf der Anschlussplatte im Betrieb des Coriolis-Massendurchflussmessgerätes sowohl wenigstens ein in Abhängigkeit von der gewünschten Stromstärke aktivierter als auch wenigstens ein deaktivierter Widerstand vorhanden sind. Wie schon beschrieben, wird die Aktivierung beziehungsweise Deaktivierung üblicherweise durch einen Monteur in Abhängigkeit vom verwendeten Treiber vorgenommen. Normalerweise wird bei der Konstruktion von Geräten Wert darauf gelegt, möglichst keine für den Betrieb nicht benötigten Teile zu verbauen, um so Produktionskosten zu sparen. Die Erfindung schlägt einen hiervon ganz bewusst abweichenden Weg ein und nimmt in Kauf, dass auf der Anschlussplatte deaktivierte Widerstände vorhanden sind, die keinerlei Wirkung im Betrieb des Coriolis-Massendurchflussmessgerätes haben. Der Vorteil dieser auf den ersten Blick überflüssigen Widerstände liegt darin, dass ein und dieselbe Anschlussplatte für den Betrieb sämtlicher Coriolis-Massendurchflussmessgeräte mit unterschiedlichsten Treibern eingesetzt werden kann. Die Kosten für die zusätzlichen Widerstände, die dann nicht im Betrieb des Coriolis-Massendurchflussmessgerätes genutzt werden, werden durch die Vereinfachung der Herstellung und insbesondere auch der Zertifizierung zur Verwendung in explosionsgefährdeten Bereichen weit übertroffen.

Ganz besonders lässt sich die Anzahl der mit der erfindungsgemäßen Anschlussplatte betreibbaren Treiber dadurch erhöhen, dass die parallel geschalteten Widerstände unterschiedliche Widerstandswerte, insbesondere Widerstandswerte bis 2000 Ω, aufweisen. Jeder der mehreren parallel geschalteten Widerstände weist also einen unterschiedlichen Widerstandswert gegenüber den anderen Widerständen auf. Nicht zu vergessen ist hierbei, dass, wie vorstehend schon beschrieben, bei der Parallelschaltung eines Widerstandes zum Stromkreis auch derjenige Leitungsabschnitt, zu dem der Widerstand parallel geschaltet ist, zu einem parallel geschalteten Widerstand wird, in diesem Fall beispielsweise mit einem Widerstandswert von 0 Ω. Auf diese Weise ist mit den parallel geschalteten Widerständen, einschließlich des parallel geschalteten Leitungsabschnitts, ein breites Spektrum von Widerstandswerten abgedeckt, und es wird eine größtmögliche Flexibilität der erfindungsgemäßen Anschlussplatte erreicht.

Jeder der parallel geschalteten Widerstände kann ein einfacher Widerstand sein, der alleine für sich einen gewünschten Widerstandswert aufweist. Alternativ ist es ebenfalls möglich, dass der wenigstens eine parallel geschaltete Widerstand mehrere, zum Beispiel zwei, in Reihe geschaltete Einzelwiderstände umfasst. Die Widerstandswerte der Einzelwiderstände addieren sich dann zum gesamten Widerstandswert des parallel geschalteten Widerstandes.

Die Aktivierbarkeit beziehungsweise Deaktivierbarkeit der parallel geschalteten Widerstände lässt sich auf vielfältige Weise realisieren. Zweckmäßig soll die Aktivierung beziehungsweise Deaktivierung von einem Bediener schnell und unkompliziert, möglichst ohne Zuhilfenahme von Spezialwerkzeug, durchführbar sein. Es ist daher bevorzugt, dass der wenigstens eine parallel geschaltete Widerstand durch einen mit dem Widerstand in Reihe geschalteten Jumper aktivierbar oder deaktivierbar ist, wobei der Jumper insbesondere eine durchtrennbare Drahtbrücke oder eine lösbare Steckverbindung umfasst. Eine besonders einfache Ausführungsform sieht beispielsweise vor, dass der wenigstens eine parallel geschaltete Widerstand eine Drahtbrücke umfasst, die von außen an der Anschlussplatte für einen Bediener zugänglich ist und über die der Stromfluss, der durch den Widerstand geleitet wird, ebenfalls fließen muss. In diesem Fall wird die Anschlussplatte mit intakter Drahtbrücke produziert, sodass der Widerstand zu Beginn aktiviert ist. Will ein Bediener beziehungsweise Monteur zur Anpassung der Stromstärke im Stromkreis des Treibers den wenigstens einen Widerstand deaktivieren, so durchtrennt er lediglich die Drahtbrücke des zu deaktivierenden Widerstandes. Auf diese Weise ist die elektrische Verbindung des Widerstandes zum Stromkreis des Treibers unterbrochen, und der Widerstand entfaltet keinerlei Wirkung mehr. Beispielsweise können sämtliche parallel geschalteten Widerstände der Anschlussplatte mit derartigen Drahtbrücken ausgestattet sein. In diesem Fall sind sämtliche parallel geschalteten Widerstände nach der Herstellung der Anschlussplatte zunächst aktiviert und können selektiv von einem Monteur entsprechend der gewünschten Stromstärke im Treiber-Stromkreis deaktiviert werden. Das Deaktivieren eines Widerstandes kann auch auf jede andere denkbare Weise erfolgen, beispielsweise durch Entfernen einer Steckbrücke. In einer alternativen Ausführungsform können alle parallel geschalteten Widerstände zunächst deaktiviert ausgebildet sein, und der passende Widerstand wird dann gezielt aktiviert. Dies kann beispielsweise mithilfe einer Steckbrücke erfolgen. Hierfür kann der Jumper zum Beispiel Stifte beziehungsweise eine Stiftleiste umfassend, auf die eine Steckbrücke beziehungsweise ein Kurzschlussstecker aufgesteckt wird und den Stromkreis schließt. Je nach der gewünschten Stromstärke für den eingesetzten Treiber kann ein Monteur also durch Anbringen oder Abnehmen der Steckbrücken den entsprechenden Widerstand aktivieren beziehungsweise deaktivieren. Schließlich ist ebenfalls eine Kombination der obigen Möglichkeiten denkbar. So kann beispielsweise ein Widerstand für eine besonders häufig verwendete Stromstärke durch Einstecken einer Steckbrücke bei der Herstellung aktiviert sein, während die anderen Widerstände deaktiviert sind. Soll die Anschlussplatte dann doch für einen anderen Treiber und mit einer anderen Stromstärke verwendet werden, wird der zunächst aktivierte Widerstand durch Entnahme der Steckbrücke deaktiviert und statt dessen ein anderer der parallel geschalteten Widerstände durch Einstecken der Steckbrücke aktiviert.

Typischerweise weist das Coriolis-Massendurchflussmessgerät ein Messgehäuse mit einem Hals und einen an dem Hals befestigbaren Transmitter zur Auswertung und/oder Anzeige der Messdaten auf. Oftmals befinden sich auch eine oder mehrere Spannungsquellen für den Treiber und die Sensoren im Transmitter des Coriolis-Massendurchflussmessgerätes. Der Stromkreis des Treibers auf der Anschlussplatte muss also typischerweise mit einer Spannungsquelle im Transmitter verbunden werden. Da der Treiber im Messgehäuse angeordnet ist und der Transmitter auf dem Hals des Messgehäuses montiert wird, ist es bevorzugt, dass die Anschlussplatte derart im Hals des Messgehäuses angeordnet ist, dass sie bei nicht am Hals befestigtem Transmitter durch einen Bediener von außen zugänglich ist. Insbesondere ist in diesem Zustand der wenigstens eine Jumper des wenigstens einen parallel geschalteten Widerstandes durch einen Bediener von außen zugänglich beziehungsweise sind dies sämtliche Jumper sämtlicher parallel geschalteten Widerstände des Stromkreises des Treibers. Der Hals des Messgehäuses ist also derjenige Bereich, der zum Anschluss des Transmitters ausgebildet ist, beispielsweise mittels einer Flanschverbindung. Typischerweise umfasst der Hals eine Öffnung im Messgehäuse, durch die das Innenleben des Coriolis-Massendurchflussmessgerätes, insbesondere das Messrohr, der Treiber, der erste Sensor und der zweite Sensor sowie ein Temperatursensor zugänglich sind. In dieser Öffnung wird die Anschlussplatte nun derart montiert, dass die Jumper zur Außenseite, meist vom Messrohr weg, ausgerichtet sind. Auf diese Weise kann ein Monteur bei der Installation des Coriolis-Massendurchflussmessgerätes die Konfiguration der Jumper und damit die Aktivierung beziehungsweise Deaktivierung der einzelnen parallel geschalteten Widerstände je nach eingesetztem Treiber vornehmen. Ist diese Konfiguration vorgenommen und die Anschlussplatte mit der oder den Spannungsquellen im Transmitter verbunden, so kann der Transmitter auf dem Hals des Messgehäuses befestigt werden. Diese Anordnung hat den weiteren Vorteil, dass nach der Installation des Coriolis-Massendurchflussmessgerätes die Anschlussplatte vor dem Zugriff von außen abgeschirmt ist und ohne Weiteres keine Veränderungen an der Anschlussplatte mehr vorgenommen werden können. Manipulationen, welche die Eigensicherheit des Geräts gefährden könnten, können in an sich bekannter Weise durch festes Verschließen des Halses unterbunden werden.

Die Lösung der eingangs genannten Aufgabe der Erfindung gelingt ebenfalls mit einem Verfahren zur Einstellung der Stromstärke in einem Stromkreis eines Treibers eines Coriolis-Massendurchflussmessgerätes, insbesondere eines Coriolis-Massendurchflussmessgerätes gemäß den vorstehenden Ausführungen, das die folgenden Schritte umfasst:
- Auswählen wenigstens eines passenden Widerstandes aus einer Mehrzahl von im Stromkreis des Treibers an einer Anschlussplatte parallel geschalteten Widerständen,
- Aktivieren des wenigstens einen ausgewählten Widerstandes und/oder
- Deaktivieren des nicht ausgewählten Widerstandes oder der nicht ausgewählten Widerstände, so dass dieselbe Anschlussplatte für verschiedene Treiber eingesetzt werden kann.

Sämtliche bereits vorstehend genannten Vorteile und Wirkungen der Erfindung lassen sich ebenfalls mit dem erfindungsgemäßen Verfahren erreichen, weshalb zur Vermeidung von Wiederholungen auf die vorstehenden Ausführungen Bezug genommen wird. Wie schon erläutert, kann die Mehrzahl der im Stromkreis des Treibers parallel geschalteten Widerstände ebenfalls einen zu diesen Widerständen parallel geschalteten Bestandteil einer Leitung mit einem Widerstandswert von im Wesentlichen 0 Ω umfassen. Das Auswählen der passenden Widerstände geschieht anhand der Bedürfnisse des im Stromkreis zu betreibenden Treibers des Coriolis-Massendurchflussmessgerätes. Je nachdem, welche Stromstärke der jeweilige Treiber benötigt, kann diese über den selektiven Einsatz wenigstens eines aus einer Gruppe der im Stromkreis des Treibers parallel geschalteten Widerstände ausgewählten Widerstandes unter Ausschluss der restlichen Widerstände eingestellt werden. Je nachdem, ob die parallel geschalteten Widerstände zu Beginn des Verfahrens im aktivierten oder im deaktivierten Zustand vorliegen, müssen diese entsprechend deaktiviert oder aktiviert werden.

Um den Einsatz des Coriolis-Massendurchflussmessgerätes in explosionsgefährdeten Bereichen zu ermöglichen, ist es bevorzugt, dass das Auswählen von passenden Widerständen derart erfolgt, dass der Stromkreis des Treibers durch die aktivierten und deaktivierten Widerstände im Ergebnis eigensicher ausgebildet ist, insbesondere mit maximaler eigensicherer Leistung. Auch hier gilt, dass die jeweils zulässige maximale eigensichere Leistung, die durch die einschlägigen Normen vorgegeben wird, durch das erfindungsgemäße Verfahren ausgereizt werden kann.

Es hat sich gezeigt, dass das erfindungsgemäße Verfahren besonders schnell und einfach und insbesondere ohne Einsatz von Spezialwerkzeugen durchführbar ist, wenn das Deaktivieren der nicht ausgewählten Widerstände durch das Durchtrennen der Drahtbrücke eines jeweiligen Jumpers und/oder durch das Lösen einer Steckverbindung eines jeweiligen Jumpers und/oder das Aktivieren von ausgewählten Widerständen durch das Schließen einer Steckverbindung eines jeweiligen Jumpers erfolgt. Insgesamt ist so nicht nur die Herstellung und die Zulassung des erfindungsgemäßen Coriolis-Massendurchflussmessgerätes besonders einfach und kostengünstig, sondern auch die Montage vor Ort schnell und unkompliziert.

Die Erfindung wird nachstehend anhand der in den Figuren gezeigten Ausführungsbeispiele näher erläutert, wobei diese lediglich in nicht beschränkender Weise bevorzugte Varianten der Erfindung beschreiben. Es zeigen schematisch:
- Figur 1: ein in eine Rohrleitung montiertes Coriolis-Massendurchflussmessgerät;
- Figur 2: einen Längsschnitt durch das Messgehäuse des Coriolis-Massendurchflussmessgerätes aus Figur 1;
- Figur 3: einen elektrischen Schaltplan des Coriolis-Massendurchflussmessgerätes und
- Figur 4: ein Ablaufdiagramm des erfindungsgemäßen Verfahrens.

Gleiche bzw. funktionsgleiche Bauteile sind mit den gleichen Bezugszeichen beziffert. Sich wiederholende Bauteile sind nicht in jeder Figur gesondert bezeichnet.

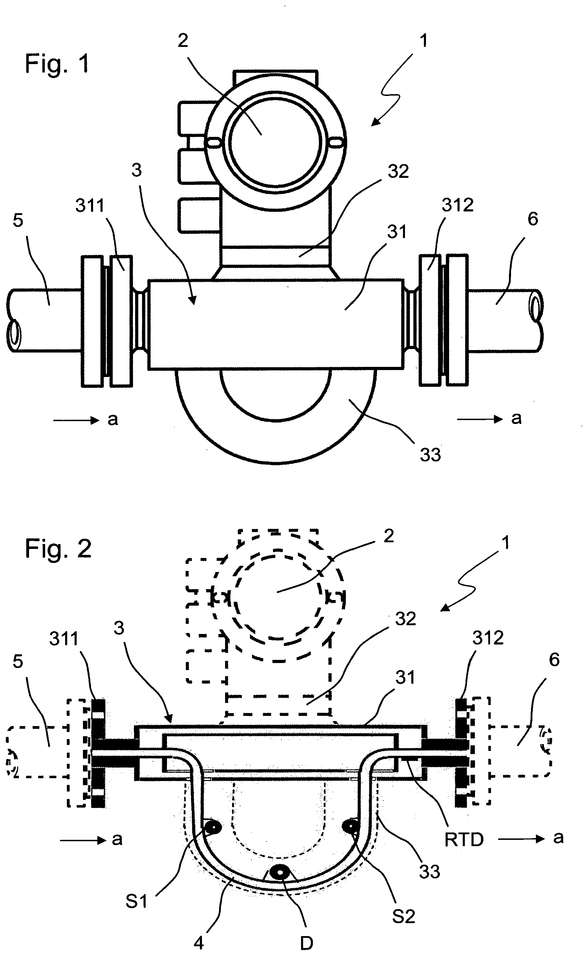

Figur 1 zeigt ein Coriolis-Massendurchflussmessgerät 1, das in einer Rohrleitung zwischen einer Zuleitung 5 und einer Ableitung 6 montiert ist. Das Coriolis-Massendurchflussmessgerät 1 weist einen Transmitter 2 und ein Messgehäuse 3 auf. Der Transmitter 2 ist auf einem Hals 32 des Messgehäuses 3 montiert, beispielsweise angeflanscht. In die Rohrleitung ist das Coriolis-Massendurchflussmessgerät 1 über ein Anschlussstück 31 des Messgehäuses 3 eingefügt. Konkret ist das Anschlussstück 31 über einen ersten Anschluss 311 mit der Zuleitung 5 und über einen zweiten Anschluss 312 mit der Ableitung 6 der Rohrleitung verbunden. Die Fluidverbindung von der Zuleitung 5 zur Ableitung 6 in Fließrichtung a verläuft dabei durch das Rohrgehäuse 33 des Messgehäuses 3, wie insbesondere aus Figur 2 näher hervorgeht. Die Anordnung von Zuleitung 5 und Ableitung 6 kann selbstverständlich auch umgekehrt werden und ist lediglich exemplarisch, da das Coriolis-Massendurchflussmessgerät 1 genauso gut auch bei umgekehrter Fließrichtung a einsetzbar ist.

Figur 2 zeigt diejenigen Bestandteile des Coriolis-Massendurchflussmessgerätes 1 im Querschnitt, die zur Herstellung einer Fluidverbindung zwischen der Zuleitung 5 und der Ableitung 6 beitragen. Die weiteren Teile des Coriolis-Massendurchflussmessgerätes 1 sowie die Rohrleitung sind lediglich gestrichelt angedeutet. Zwischen dem ersten Anschluss 311 und dem zweiten Anschluss 312 verläuft ein Messrohr 4, das eine Fluidverbindung zwischen der Zuleitung 5 und der Ableitung 6 der Rohrleitung herstellt. Das Messrohr 4 verläuft durch das Anschlussstück 31 und bildet einen kurven- bzw. schlaufenförmigen Abschnitt, der aus dem Anschlussstück 31 heraus, durch das Rohrgehäuse 33 hindurch und wieder in das Anschlussstück 31 zurück verläuft. Am schlaufenförmigen Abschnitt des Messrohres 4 ist ein Treiber D, zum Beispiel eine elektromagnetische Treiberspule, angeordnet, der das Messrohr 4 in Schwingungen, beispielsweise Resonanzschwingungen, versetzt. Diese Schwingungen werden vom ersten Sensor S1 und zweiten Sensor S2 gemessen, die in Fließrichtung a am Messrohr 4 versetzt zueinander angeordnet sind. Wird das Messrohr 4 von einem Messmedium durchströmt, so kommt es aufgrund der Coriolis-Kraft zu einer Phasenverschiebung zwischen den am ersten Sensor S1 und am zweiten Sensor S2 gemessenen Schwingungen des Messrohres 4. Aus der Phasenverschiebung kann auf den Massedurchfluss geschlossen werden. Darüber hinaus ist am Messrohr 4 noch ein Temperatursensor RTD (*resistance temperature device*) angeordnet, der die Temperatur des Messmediums misst. Insgesamt lassen sich aus den vom Coriolis-Massendurchflussmessgerät 1 gemessenen Größen eine Vielzahl von Parametern bestimmen, die in unterschiedlichen Industriezweigen relevant sind.

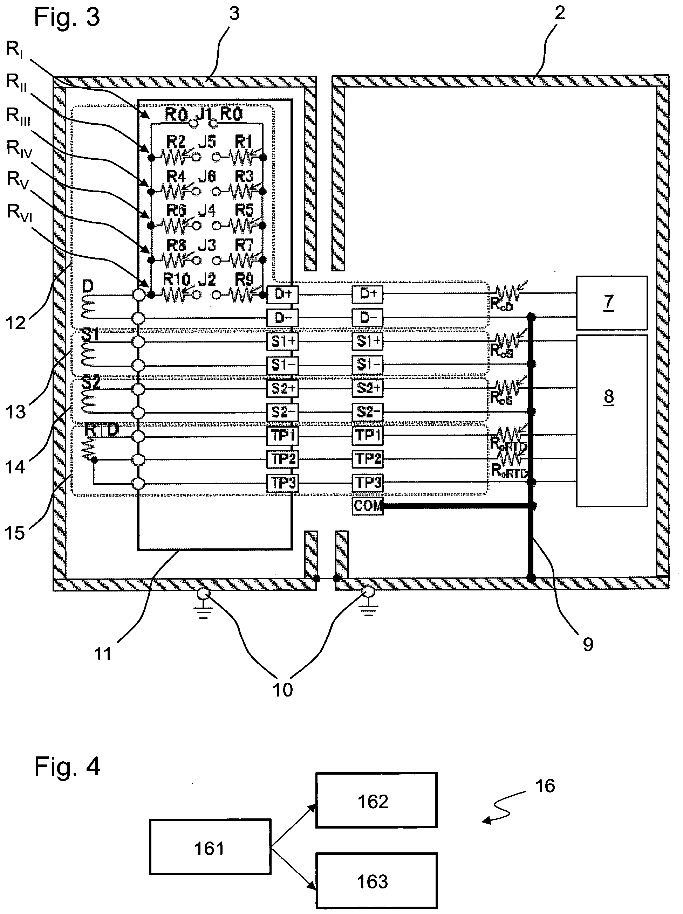

Die elektrische Verschaltung des Coriolis-Massendurchflussmessgerätes 1, insbesondere diejenige im Messgehäuse 3 und deren Verbindung zum Transmitter 2, wird nachstehend anhand des Schaltplanes der Figur 3 erläutert. Der Transmitter 2, bzw. dessen Gehäuse, und das Messgehäuse 3 sind in Figur 3 angedeutet, um klarzumachen, welche Bestandteile der im Schaltplan gezeigten Stromkreise sich im Transmitter 2 bzw. im Messgehäuse 3 befinden. Im Messgehäuse 3, insbesondere im Hals 32 des Messgehäuses 3, befindet sich eine Anschlussplatte 11 zur Versorgung des Treibers D, des ersten Sensors S1, des zweiten Sensors S2 und des Temperatursensors RTD mit Strom. Der Schaltplan gemäß Figur 3 enthält im gestrichelten Kasten 12 einen Stromkreis des Treibers D, nachfolgend Stromkreis 12, im Kasten 13 einen Stromkreis 13 des ersten Sensors S1, im Kasten 14 einen Stromkreis 14 des zweiten Sensors S2 und im Kasten 15 einen Stromkreis 15 des Temperatursensors RTD. Da der Transmitter 2 vom Messgehäuse 3 des Coriolis-Massendurchflussmessgerätes 1 demontiert werden kann, sind an der Anschlussplatte 11 Anschlüsse für die jeweiligen Bestandteile der Stromkreise zur Kontaktierung von Messgehäuse 3 und Transmitter 2 vorhanden, beispielsweise Klemmen. Konkret sind an der Anschlussplatte 11 die Anschlüsse D+ und D- für den Stromkreis 12 des Treibers D vorgesehen. Weiter sind die Anschlüsse S1+ und S1- für den Stromkreis 13 des ersten Sensors S1, die Anschlüsse S2+ und S2- für den Stromkreis 14 des zweiten Sensors S2 und die Anschlüsse TP1, TP2 und TP3 für den Stromkreis 15 des Temperatursensors RTD vorgesehen. Über diese an der Anschlussplatte 11 vorgesehenen Anschlüsse bzw. Klemmen lassen sich die Bestandteile der jeweiligen Stromkreise 12, 13, 14, 15 auf der Anschlussplatte 11 schnell und einfach bei der Montage des Coriolis-Massendurchflussmessgerätes 1 mit den Bestandteilen der Stromkreise 12, 13, 14, 15 im Transmitter 2 verbinden. Wie aus dem Schaltplan hervorgeht, sind sämtliche Stromkreise 12, 13, 14 , 15 über eine Verbindung 9 mit einer Erdung 10 verbunden. Diese Erdung 10 der Stromkreise 12, 13, 14, 15 dient beispielsweise der Eigensicherheit der Schaltung im Transmitter 2 und sorgt entsprechend für Explosionssicherheit in explosionsgefährdeter Atmosphäre. Der Stromkreis 12 des Treibers D ist im gezeigten Ausführungsbeispiel mit einer ersten Spannungsquelle 7 verbunden, die beispielsweise eine Spannung von 15 Volt bereitstellt. Die Stromkreise 13, 14, 15 der Sensoren S1, S2 und des Temperatursensors RTD sind im gezeigten Ausführungsbeispiel mit einer zweiten Spannungsquelle 8 verbunden, die beispielsweise eine Spannung von 7,5 Volt bereitstellt. Um die Spannung bzw. den Stromfluss in den Stromkreisen 12, 13, 14, 15 an den jeweiligen Verbraucher anzupassen, sind in den jeweiligen Stromkreisen 12, 13, 14 , 15 Widerstände R_{0D}, R_{0S}, R_{0RTD} angeordnet. Die Strombegrenzung durch die Widerstände R_{0D}, R_{0S}, R_{0RTD} dient sowohl der Funktionalität der jeweiligen Verbraucher als auch dem Explosionsschutz auf der Seite des Transmitters 2.

Gemäß dem gezeigten Ausführungsbeispiel der vorliegenden Erfindung befinden sich auf der Anschlussplatte 11 im Stromkreis 12 des Treibers D sechs parallel geschaltete Widerstände R_{I}, R_{II}, R_{III}, R_{IV}, R_{V}, R_{VI}. Die Widerstände R_{I}-R_{VI}, sind zueinander parallel geschaltet und befinden sich im Stromkreis 12 des Treibers D. Jeder der Widerstände R_{I}-R_{VI} ist aus zwei Einzelwiderständen aufgebaut (R0-R10). So umfasst beispielsweise der Widerstand R, zwei Einzelwiderstände R0, der Widerstand R_{II} umfasst die Einzelwiderstände R1 und R2, der Widerstand R_{III}, umfasst die Einzelwiderstände R3 und R4, der Widerstand R_{IV} umfasst die Einzelwiderstände R5 und R6, der Widerstand R_{V} umfasst die Einzelwiderstände R7 und R8 und der Widerstand R_{VI} umfasst die Einzelwiderstände R9 und R10. Die von einem Widerstand R_{I}-R_{VI}, jeweils umfassten Einzelwiderstände R0-R10 weisen dabei paarweise dieselben Widerstandswerte auf. So weisen beispielsweise die Einzelwiderstände R3 und R4 denselben Widerstandswert auf, ebenso die Einzelwiderstände der Paare R5 und R6 oder R7 und R8. Die einzelnen Widerstände R_{I}-R_{VI}, dagegen weisen unterschiedliche Widerstandswerte auf, die insbesondere im Bereich zwischen 0 und 2000 Ω liegen. Im gezeigten Ausführungsbeispiel weist der Widerstand R, einen Widerstandswert von 0 Ω auf und umfasst im Wesentlichen einen Abschnitt des Stromkreises des Treibers, in dem sich kein weiteres elektrisches Bauelement befindet. Der Widerstandswert des Widerstandes R_{II} beträgt beispielsweise 400 Ω, derjenige des Widerstandes R_{III} beträgt beispielsweise 800 Ω, derjenige des Widerstandes R_{IV} beträgt beispielsweise 1200 Ω, derjenige des Widerstandes R_{V} beträgt beispielsweise 1600 Ω und derjenige des Widerstandes R_{VI} beträgt beispielsweise 2000 Ω.

Jeder einzelne der Widerstände R_{I}-R_{VI} umfasst weiterhin einen Jumper J1, J2, J3, J4, J5, J6. Über die Jumper J1-J6 lassen sich die Widerstände R_{I}-R_{VI}, aktivieren bzw. deaktivieren. Aktivieren bedeutet dabei, dass der jeweilige Jumper J1-J6 kontaktiert bzw. stromdurchlässig gemacht wird, so dass der jeweilige Widerstand R_{I}-R_{VI}, in den Stromkreis 12 des Treibers D eingebunden ist. Deaktivieren bedeutet im Gegensatz dazu, dass der jeweilige Jumper J1-J6 unterbrochen bzw. stromundurchlässig gemacht wird, wodurch der entsprechende Widerstand R_{I}-R_{VI}, funktional aus dem Stromkreis 12 des Treibers D herausgenommen ist. Die Jumper J1-J6 sind dabei beispielsweise derart ausgebildet, dass sie Drahtbrücken aufweisen, die von einem Bediener durchtrennbar sind. Nach der Herstellung der Anschlussplatte 11 sind zunächst alle Jumper J1-J6 stromdurchlässig und sämtliche Widerstände R_{I}-R_{VI} aktiviert. Durch das Durchtrennen von einzelnen Jumpern J1-J6 kann ein Bediener dann eine gewünschte Kombination von Widerständen R_{I}R_{VI} deaktivieren und dadurch eine an den jeweiligen Treiber D angepasste Strombegrenzung im Stromkreis 12 direkt auf der Anschlussplatte 11 einstellen. Konkret könnten beispielsweise die Drahtbrücken der Widerstände R_{I}-R_{IV} und R_{VI} durchtrennt werden, womit nur noch der Widerstand R_{V} mit einem Widerstandswert von 1600 Ω aktiv wäre. Auf diese Weise kann die Anschlussplatte 11 an unterschiedliche Treiber D angepasst und insbesondere auch eigensicher für den jeweiligen Treiber D eingestellt werden. Aufgrund der verschiedenen Widerstandswerte der Widerstände R_{I}-R_{VI}, lässt sich die Anschlussplatte 11 mit einer Vielzahl von Treibern D kombinieren, wobei aufgrund der vorherigen Zulassungsprüfung der Anschlussplatte 11 mit der erfindungsgemäßen Anordnung der Widerstände R_{I}-R_{VI} keine erneute Zulassung der zuständigen Behörde in Bezug auf Explosionssicherheit notwendig ist. Eine Besonderheit der Erfindung liegt also darin, dass auf der Anschlussplatte 11 nach deren Konfiguration in Bezug auf den eingesetzten Treiber D sowohl aktivierte als auch deaktivierte Widerstände R_{I}-R_{VI}, vorhanden sind. Die Wirkung der deaktivierten Widerstände R_{I}-R_{VI}, liegt also nicht in der Wirkung als Widerstand, sondern in der Bereitstellung der Flexibilität des Einsatzes der Anschlussplatte 11 an sich in Bezug auf unterschiedliche Treiber D.

Figur 4 zeigt ein Ablaufdiagramm zum erfindungsgemäßen Verfahren 16. Das Verfahren 16 zur Einstellung der Stromstärke in einem Stromkreis 12 eines Treibers D eines Coriolis-Massendurchflussmessgerätes 1 beginnt mit dem Auswählen 161 eines der Widerstände R_{I}-R_{VI}, die sich alle im Stromkreis 12 parallel zueinander und zum Stromkreis 12 geschaltet befinden, unter dem Aspekt, ob er für den Betrieb, insbesondere den eigensicheren Betrieb des Treibers D, benötigt wird. Je nachdem, wie die Jumper J1-J6 der Widerstände R_{I}-R_{VI} ausgebildet sind, sind die Widerstände R_{I}-R_{VI} in diesem Schritt entweder aktiviert oder deaktiviert. Je nach verwendetem Treiber D muss dann der passende der Widerstände R_{I}-R_{VI}, ausgewählt werden, der den eigensicheren Betrieb des Coriolis-Massendurchflussmessgerätes 1 ermöglicht. Um während des Betriebes des Coriolis-Massendurchflussmessgerätes 1 nur den benötigten der Widerstände R_{I}-R_{VI}, aktiviert zu haben, muss also entsprechend ein Aktivieren 162 des ausgewählten bzw. des zum Betrieb des Treibers D notwendigen der Widerstände R_{I}-R_{VI} und ein Deaktivieren 163 der nicht ausgewählten bzw. nicht zum Betrieb des Treibers D notwendigen Widerstände R_{I}-R_{VI}, durchgeführt werden. Auf diese Weise lässt sich die Stromstärke im Stromkreis 12 des Treibers D einfach an die Anforderungen des jeweiligen Treibers D anpassen. Darüber hinaus lässt sich über die Einstellung der Stromstärke durch die Aktivierung 162 bzw. Deaktivierung 163 der einzelnen Widerstände R_{I}-R_{VI} eine Eigensicherheit des Stromkreises 12 direkt auf der Anschlussplatte 11 erzielen, wodurch auch eine nachträgliche Änderung des Treibers D nicht dazu führt, dass ein neuer Antrag auf Prüfung bzw. Zulassung des Coriolis-Massendurchflussmessgerätes 1 zur Verwendung in explosionsgefährdeten Bereichen notwendig ist. Die Anschlussplatte 11 kann vielmehr an diese Änderung durch Aktivierung/Deaktivierung anderer geeigneter Widerstände angepasst werden.

## Patentansprüche

1. Coriolis-Massendurchflussmessgerät (1), mit
- wenigstens einem Messrohr (4), durch das ein Messmedium hindurch geleitet werden kann,
- einem Treiber (D), der das Messrohr (4) in Resonanzschwingungen versetzt,
- einem ersten Sensor (S1) und einem zweiten Sensor (S2), die entlang einer Fließrichtung (a) des Messmediums versetzt zueinander am Messrohr (4) angeordnet sind und die die Schwingungen des Messrohres (4) detektieren, und
- einer Anschlussplatte (11) zum elektrischen Anschluss eines Stromkreises (12) des Treibers (D) an eine Spannungsquelle (7),
**dadurch gekennzeichnet,**
**dass** an der Anschlussplatte (11) im Stromkreis (12) des Treibers (D) wenigstens ein parallel zum Stromkreis (12) geschalteter Widerstand (R_{I}-R_{VI}) vorgesehen ist, der zur Einstellung einer bestimmten Stromstärke im Stromkreis (12) zur Anpassung an die Anforderungen des Treibers (D) aktivierbar oder deaktivierbar ist, so dass dieselbe Anschlussplatte (11) für verschiedene Treiber (D) eingesetzt werden kann.

2. Coriolis-Massendurchflussmessgerät (1) nach Anspruch 1,
**dadurch gekennzeichnet,**
**dass** der Stromkreis (12) des Treibers (D) auf der Anschlussplatte (11) durch den wenigstens einen parallel geschalteten Widerstand (R_{I}-R_{VI}) eigensicher ausgebildet ist, insbesondere mit maximaler eigensicherer Leistung.

3. Coriolis-Massendurchflussmessgerät (1) nach einem der vorhergehenden Ansprüche,
**dadurch gekennzeichnet,**
**dass** mehrere parallel geschaltete Widerstände (R_{I}-R_{VI}), insbesondere zwei bis sechs, bevorzugt sechs und besonders bevorzugt mehr als sechs parallel geschaltete Widerstände (R_{I}-R_{VI}), im Stromkreis (12) des Treibers (D) vorgesehen sind.

4. Coriolis-Massendurchflussmessgerät (1) nach Anspruch 3,
**dadurch gekennzeichnet,**
**dass** auf der Anschlussplatte (11) im Betrieb des Coriolis-Massendurchflussmessgerätes (1) sowohl wenigstens ein in Abhängigkeit von der gewünschten Stromstärke aktivierter als auch wenigstens ein deaktivierter Widerstand (R_{I}-R_{VI}) vorhanden sind.

5. Coriolis-Massendurchflussmessgerät (1) nach einem der Ansprüche 3 oder 4,
**dadurch gekennzeichnet,**
**dass** die parallel geschalteten Widerstände (R_{I}-R_{VI}) unterschiedliche Widerstandswerte, insbesondere Widerstandswerte bis 2000 Ω, aufweisen.

6. Coriolis-Massendurchflussmessgerät (1) nach einem der vorhergehenden Ansprüche,
**dadurch gekennzeichnet,**
**dass** der wenigstens eine parallel geschaltete Widerstand (R_{I}-R_{VI}) zwei in Reihe geschaltete Einzelwiderstände (RO-10) umfasst.

7. Coriolis-Massendurchflussmessgerät (1) nach einem der vorhergehenden Ansprüche,
**dadurch gekennzeichnet,**
**dass** der wenigstens eine parallel geschaltete Widerstand (R_{I}-R_{VI}) durch einen mit dem Widerstand (R_{I}-R_{VI}) in Reihe geschalteten Jumper (J1-6) aktivierbar oder deaktivierbar ist, wobei der Jumper (J1-6) insbesondere eine durchtrennbare Drahtbrücke oder eine lösbare Steckverbindung umfasst.

8. Coriolis-Massendurchflussmessgerät (1) nach einem der vorhergehenden Ansprüche,
**dadurch gekennzeichnet,**
**dass** es ein Messgehäuse (3) mit einem Hals (32) und einen an dem Hals (32) befestigbaren Transmitter (2) zur Auswertung und/oder Anzeige der Messdaten aufweist, und dass die Anschlussplatte (11) derart im Hals (32) des Messgehäuses (3) angeordnet ist, dass sie bei nicht am Hals (32) befestigtem Transmitter (2) durch einen Bediener von außen zugänglich ist.

9. Verfahren zur Anpassung der Stromstärke in einem Stromkreis (12) eines Treibers (D) eines Coriolis-Massendurchflussmessgerätes (1) an die Anforderungen des Treibers (D), insbesondere gemäß einem der vorhergehenden Ansprüche,
**gekennzeichnet durch** die Schritte:
- Auswählen wenigstens eines passenden Widerstandes (R_{I}-R_{VI}) aus einer Mehrzahl von im Stromkreis (12) des Treibers (D) an einer Anschlussplatte (11) parallel geschalteten Widerständen (R_{I}-R_{VI}),
- Aktivieren des wenigstens einen ausgewählten Widerstandes (R_{I}-R_{VI}) und/oder
- Deaktivieren des nicht ausgewählten Widerstandes oder der nicht ausgewählten Widerstände (R_{I}-R_{VI}),
so dass dieselbe Anschlussplatte (11) für verschiedene Treiber (D) eingesetzt werden kann.

10. Verfahren nach Anspruch 9,
**dadurch gekennzeichnet,**
**dass** das Auswählen von passenden Widerständen (R_{I}-R_{VI}) derart erfolgt, dass der Stromkreis (12) des Treibers (D) durch die aktivierten und deaktivierten Widerstände (R_{I}-R_{VI}) im Ergebnis eigensicher ausgebildet ist, insbesondere mit maximaler eigensicherer Leistung.

11. Verfahren nach einem der Ansprüche 9 oder 10,
**dadurch gekennzeichnet,**
**dass** es wenigstens einen der folgenden Schritte umfasst:
- Deaktivieren des nicht ausgewählten Widerstandes oder der nicht ausgewählten Widerstände (R_{I}-R_{VI}) durch das Durchtrennen der Drahtbrücke eines jeweiligen Jumpers (J1-6);
- Deaktivieren des nicht ausgewählten Widerstandes oder der nicht ausgewählten Widerstände (R_{I}-R_{VI}) durch das Lösen einer Steckverbindung eines jeweiligen Jumpers (J1-6);
- Aktivieren des ausgewählten Widerstandes oder der ausgewählten Widerstände (R_{I}-R_{VI}) durch das Schließen einer Steckverbindung eines jeweiligen Jumpers (J1-6).

## Claims

1. A Coriolis mass flow meter (1), having
- at least one measuring tube (4) through which a measuring medium can be passed,
- a driver (D) which sets the measuring tube (4) into resonant vibration,
- a first sensor (S1) and a second sensor (S2) which are arranged on the measuring tube (4) offset from one another along a flow direction (a) of the measuring medium and detect the vibrations of the measuring tube (4), and
- a terminal board (11) for electrically connecting an electric circuit (12) of the driver (D) to a voltage source (7),
**characterized in that**
at least one resistor (R_{I}-R_{VI}) is provided in, and connected parallel to, the electric circuit (12) of the driver (D) on the terminal board (11), wherein said at least one resistor can be activated or deactivated to set a specific current intensity in the electric circuit (12) for adaptation to the requirements of the driver (D), so that the same terminal plate (11) can be used for different drivers (D).

2. The Coriolis mass flow meter (1) according to claim 1,
**characterized in that**
1of the electric circuit (12) of the driver (D) on the terminal board (11), in particular with an intrinsically safe maximum power.

3. The Coriolis mass flow meter (1) according to any one of the preceding claims,
**characterized in that**
multiple parallel-connected resistors (R_{I}-R_{VI}), in particular two to six, preferably six, and more preferably more than six parallel-connected resistors (R_{I}-R_{VI}), are provided in the electric circuit (12) of the driver (D).

4. The Coriolis mass flow meter (1) according to claim 3,
**characterized in that**
in operation of the Coriolis mass flow meter (1), the terminal board (11) has at least one resistor (R_{I}-R_{VI}) which is activated depending on the desired current intensity as well as at least one deactivated resistor.

5. The Coriolis mass flow meter (1) according to any one of claims 3 or 4,
**characterized in that**
the parallel-connected resistors (R_{I}-R_{VI}) have different resistances, in particular resistances up to 2000 Ω.

6. The Coriolis mass flow meter (1) according to any one of the preceding claims,
**characterized in that**
the at least one parallel-connected resistor (R_{I}-R_{VI}) comprises two individual resistors (R0-10) connected in series.

7. The Coriolis mass flow meter (1) according to any one of the preceding claims,
**characterized in that**
the at least one parallel-connected resistor (R_{I}-R_{VI}) can be activated or deactivated by a jumper (J1-6) connected in series with the resistor (R_{I}-R_{VI}), in particular wherein said jumper (J1-6) comprises an interruptible wire link or a releasable plug connection.

8. The Coriolis mass flow meter (1) according to any one of the preceding claims,
**characterized in that**
it includes a measuring housing (3) with a neck (32) and a transmitter (2) for evaluating and/or indicating the measuring data which can be attached to said neck (32), and that the terminal board (11) is arranged inside the neck (32) of the measuring housing (3) such that it can be accessed from outside by an operator when the transmitter (2) is not attached to the neck (32).

9. A method for adapting the current intensity in an electric circuit (12) of a driver (D) of a Coriolis mass flow meter (1) to the requirements of said driver (D), in particular according to any one of the preceding claims,
**characterized by** the steps of:
- selecting at least one suitable resistor (R_{I}-R_{VI}) from a plurality of resistors (R_{I}-R_{VI}) connected in parallel in the electric circuit (12) of the driver (D) on a terminal board (11),
- activating the at least one selected resistor (R_{I}-R_{VI}) and/or
- deactivating the one or more non-selected resistors (R_{I}-R_{VI}),
so that the same terminal board (11) can be used for different drivers (D).

10. The method according to claim 9,
**characterized in that**
the selection of suitable resistors (R_{I}-R_{VI}) is performed such that the activated and deactivated resistors (R_{I}-R_{VI}) result in an intrinsically safe configuration of the electric circuit (12) of the driver (D), in particular with an intrinsically safe maximum power.

11. The method according to any one of claims 9 or 10,
**characterized in that**
it comprises at least one of the following steps:
- deactivating the one or more non-selected resistors (R_{I}-R_{VI}) by interrupting the wire link of a respective jumper (J1-6);
- deactivating the one or more non-selected resistors (R_{I}-R_{VI}) by releasing a plug connection of a respective jumper (J1-6);
- activating the one or more selected resistors (R_{I}-R_{VI}) by closing a plug connection of a respective jumper (J1-6).

## Revendications

1. Débitmètre massique à effet Coriolis (1), comprenant :
- au moins un tube de mesure (4) qui peut être traversé par un milieu de mesure,
- un dispositif d'excitation (D) qui met le tube de mesure (4) en vibration de résonance,
- un premier détecteur (S1) et un second détecteur (S2) qui sont disposés sur le tube de mesure (4) avec un décalage mutuel dans une direction d'écoulement (a) du milieu de mesure et qui détectent les vibrations du tube de mesure (4), et
- une plaque de raccordement (11) pour le raccordement électrique d'un circuit électrique (12) du dispositif d'excitation (D) à une source de tension (7),
***caractérisé en* ce *que***
au moins une résistance (R_{I}-R_{VI}) est présente dans, et montée en parallèle au, circuit électrique (12) du dispositif d'excitation (D) sur la plaque de raccordement (11), ladite au moins une résistance peut être activée ou désactivée pour établir une intensité de courant spécifique dans le circuit électrique (12) pour une adaptation aux normes du dispositif d'excitation (D) de telle sorte que la même plaque de raccordement (11) puisse être utilisée pour des dispositifs d'excitation (D) différents.

2. Débitmètre massique à effet Coriolis (1) selon la revendication 1,
***caractérisé en* ce *que***
ladite au moins une résistance (R_{I}-R_{VI}) montée en parallèle assure une configuration intrinsèquement sûre du circuit électrique (12) du dispositif d'excitation (D) sur la plaque de raccordement (11), en particulier avec une puissance maximale intrinsèquement sûre.

3. Débitmètre massique à effet Coriolis (1) selon l'une quelconque des revendications précédentes,
***caractérisé en* ce *que***
une pluralité de résistances (R_{I}-R_{VI}) montées en parallèle, en particulier de deux à six, préférablement six, et de plus grande préférence plus de six résistances (R_{I}-R_{VI}) montées en parallèle sont présentes dans le circuit électrique (12) du dispositif d'excitation (D).

4. Débitmètre massique à effet Coriolis (1) selon la revendication 3,
***caractérisé en ce que***
pendant le fonctionnement du débitmètre massique à effet Coriolis (1), la plaque de raccordement (11) a au moins une résistance (R_{I}-R_{VI}) qui est activée en fonction de l'intensité de courant désirée, ainsi qu'au moins une résistance désactivée.

5. Débitmètre massique à effet Coriolis (1) selon l'une quelconque des revendications 3 ou 4,
***caractérisé en* ce *que***
les résistances (R_{I}-R_{VI}) montées en parallèle ont des valeurs de résistance différentes, en particulier des valeurs de résistance allant jusqu'à 2000 Ω.

6. Débitmètre massique à effet Coriolis (1) selon l'une quelconque des revendications précédentes,
***caractérisé en* ce *que***
ladite au moins une résistance (R_{I}-R_{VI}) montée en parallèle comprend deux résistances individuelles (R0-10) montées en série.

7. Débitmètre massique à effet Coriolis (1) selon l'une quelconque des revendications précédentes,
***caractérisé en* ce *que***
ladite au moins une résistance (R_{I}-R_{VI}) montée en parallèle peut être activée ou désactivée par un cavalier (J1-6) relié en série avec la résistance (R_{I}-R_{VI}), ledit cavalier (J1-6) comprenant en particulier un pont à fil sécable ou une connexion enfichable libérable.

8. Débitmètre massique à effet Coriolis (1) selon l'une quelconque des revendications précédentes,
***caractérisé en* ce *que***
il comprend un boîtier de mesure (3) avec un goulot (32) et un émetteur (2) pour évaluer et/ou indiquer les données de mesure, émetteur qui peut être fixé audit goulot (32), et la plaque de raccordement (11) est placée à l'intérieur du goulot (32) du boîtier de mesure (3) de telle façon qu'elle puisse être accessible depuis l'extérieur par un opérateur lorsque l'émetteur (2) n'est pas fixé au goulot (32).

9. Procédé pour adapter l'intensité du courant dans un circuit électrique (12) d'un dispositif d'excitation (D) d'un débitmètre massique à effet Coriolis (1) aux normes dudit dispositif d'excitation (D), en particulier selon l'une quelconque des revendications précédentes,
***caractérisé par les étapes consistant à* :**
- sélectionner au moins une résistance adaptée (R_{I}-R_{VI}) parmi une pluralité de résistances (R_{I}-R_{VI}) reliées en parallèle dans le circuit électrique (12) du dispositif d'excitation (D) sur une plaque de raccordement (11),
- activer ladite au moins une résistance sélectionnée (R_{I}-R_{VI}) et/ou
- désactiver la ou plusieurs des résistances non sélectionnées (R_{I}-R_{VI}),
de telle sorte que la même plaque de raccordement (11) puisse être utilisée pour différents dispositifs d'excitation (D).

10. Procédé selon la revendication 9,
***caractérisé en* ce *que***
la sélection de résistances adaptées (R_{I}-R_{VI}) est réalisée de telle sorte que les résistances activées et désactivées (R_{I}-R_{VI}) aient pour résultat une configuration intrinsèquement sûre du circuit électrique (12) du dispositif d'excitation (D), en particulier avec une puissance maximale intrinsèquement sûre.

11. Procédé selon l'une quelconque des revendications 9 ou 10,
***caractérisé en* ce *que***
il comprend au moins l'une des étapes suivantes :
- désactivation de la ou de plusieurs résistances non sélectionnées (R_{I}-R_{VI}) en interrompant le pont à fil d'un cavalier respectif (J1-6) ;
- désactivation de la ou de plusieurs résistances non sélectionnées (R_{I}-R_{VI}) en libérant une connexion enfichable d'un cavalier respectif (J1-6) ;
- activation de la ou de plusieurs résistances sélectionnées (R_{I}-R_{VI}) par fermeture d'une connexion enfichable d'un cavalier respectif (J1-6).
